# EUROPEAN PATENT APPLICATION

(11) **EP 4 578 528 A1**
(43) Date of publication of application: **02.07.2025**
(21) Application number: 24164835.1
(22) Date of filing: 20.03.2024
(51) Int. Cl.: B01D 46/00, B01D 46/24, B01D 46/52

(54) **FOLDABLE FILTER DEVICE AND AIR PURIFIER**

(30) Priority: 31.12.2023 CN 202311861319
(71) Applicant: Versuni Holding B.V., 1082 MD Amsterdam (NL)
(72) Inventor: YE, Dong Dong, 1082 MD Amsterdam (NL); ZHANG, Wei, 1082 MD Amsterdam (NL); YU, Donghai, 1082 MD Amsterdam (NL)
(74) Representative: Vollering, Stefanus Franciscus Maria

(57) **Abstract**

The present disclosure relates to a foldable filter device (100) and an air purifier. The foldable filter device (100) includes a filter element (20), the filter element (20) is constructed into a wave shape and includes a plurality of filtering surfaces (21) connected to each other in a folded manner, peaks (250) located at an outer corner of an intersection of every two adjacent filtering surfaces (21), and valleys (270) located at an inner corner of the intersection of every two adjacent filtering surfaces (21), bonding portions (260) are provided in all or part of the valleys (270) to bond every two adjacent filtering surfaces (21), a first distance (S) is reserved between each bonding portion (260) and the corresponding peak (250), and the plurality of bonding portions (260) form supporting strips (280) on the wave-shaped filter element (20) to maintain a gap between every two adjacent filtering surfaces (21).

## Description

### FIELD OF TECHNOLOGY

The present disclosure relates to the field of air purification, in particular to a foldable filter device and an air purifier.

### BACKGROUND

Air purifiers are widely used in environments, such as domestic, industrial or commercial environments. The air purifiers are capable of adsorbing, decomposing or converting various air pollutants, such as tiny particles, odors, formaldehyde and other substances in order to provide clean air to the environments. The air purifiers are provided with filter elements, which need to be replaced after being used for a period of time, so as to prolong the service life of the air purifiers and maintain the performance of the air purifiers. Therefore, the filter elements need to be packaged for storage and transportation.

It should be understood that the foregoing is intended only for a better understanding of the technical solutions of the present disclosure and is not to be considered necessarily prior art.

### SUMMARY

The present disclosure aims to solve or alleviate one or more technical problems in the known art.

According to a first aspect of the present disclosure, a foldable filter device is provided. The foldable filter device includes a filter element, the filter element is constructed into a wave shape and includes a plurality of filtering surfaces connected to each other in a folded manner, peaks located at an outer corner of an intersection of every two adjacent filtering surfaces, and valleys located at an inner corner of the intersection of every two adj acent filtering surfaces, flexible bonding portions are provided in all or part of the valleys to bond every two adjacent filtering surfaces, a first distance is reserved between each bonding portion and the corresponding peak, and the plurality of bonding portions form supporting strips on the wave-shaped filter element to maintain a gap between every two adjacent filtering surfaces. When the foldable filter device is folded, even though the angle of inner corners of some of the valleys at the place where the filter element is folded becomes larger, i.e., the distance between every two adjacent filtering surfaces on both sides of the valleys close to the positions of the peaks is stretched to a large extent, since the first distance S is reserved between each bonding portion and the corresponding peak, i.e., the filtering surfaces on both sides of crests of the peaks are not provided with the bonding portions within the length range of the first distance S, even though the bonding portions located in the valleys and at the first distance S from the peaks are stretched to a small extent, the supporting strips can withstand the small extent of stretching without breaking due to the resilience of the bonding portions, so that even if the angle of inner corners of some of the valleys becomes larger after the filter element is folded, the gap between every two adjacent filtering surfaces can be maintained. Correspondingly, when the foldable filter device is folded, the angle of inner corners of some of the valleys at the place where the filter element is folded becomes smaller, the bonding portions in the valleys are extruded to a certain extent, and the supporting strips can withstand this extent of extrusion without breaking due to the resilience of the bonding portions, so that even if the angle of inner corners of some of the valleys becomes smaller when the filter element is folded, the gap between every two adjacent filtering surfaces can be maintained. When the foldable filter device is recovered from the folded state, the supporting strips can be quickly recovered from the stretched or squeezed state due to the resilience of the bonding portions, so that the gap between every two adjacent filtering surfaces is maintained, which in turn ensures the filtering effect.

In some embodiments, the flexible bonding portions are made of foamable hot melt adhesive materials.

In some embodiments, the filter element includes an inner side face and an outer side face, and the bonding portions are configured in the valleys facing the inner side face of the filter element, and/or in the valleys facing the outer side face. That is, the supporting strips are configured to face the inner side face and/or the outer side face of the filter element respectively, so that a certain gap can be maintained between every two adjacent filtering surfaces near the supporting strips configured on the inner side and the outer side in the thickness direction of the cylinder before and after the filter element is folded. After the filter element is folded and flattened, at two ends where the filter element is folded and flattened, the bonding portions located in the valleys facing towards the inner side face of the filter element are extruded, so that the distance between every two adjacent filtering surfaces facing towards the inner side face of the filter element becomes smaller; and the bonding portions located in the valleys facing towards the outer side face of the filter element are stretched, so that the distance between every two adjacent filtering surfaces facing towards the outer side face of the filter element becomes larger. On two sides where force is applied during folding and flattening, the bonding portions located in the valleys facing towards the inner side face of the filter element are stretched, so that the distance between every two adjacent filtering surfaces facing towards the inner side face of the filter element becomes larger; and the bonding portions located in the valleys facing towards the outer side face of the filter element are extruded, so that the distance between every two adjacent filtering surfaces facing towards the outer side face of the filter element becomes smaller. However, since the bonding portions are made of foamable hot melt adhesive materials and have certain resilience, although the distance between every two adjacent filtering surfaces changes after the filter element is folded and flattened, when the filter element returns to an original state from a folded and flattened state, the squeezed or stretched flexible bonding portions still return to an original state before being folded, and accordingly the gap between every two adjacent filtering surfaces is maintained.

In some embodiments, the filter element includes a first end and a second end, and at least one or more of supporting strips are configured between the first end and second end of the filter element. After the supporting strips are configured between the first end and the second end of the filter element, a certain gap can be maintained between every two adjacent filtering surfaces near supporting strips configured between the first end and the second end of the filter element before and after the filter element is folded.

In some embodiments, a third distance is reserved between the first end and the supporting strip closest to the first end and a third distance is reserved between the second end and the supporting strip closest to the second end, and a length of the third distance accounts for 5% to 15% of a length between the first end and the second end of the filter element. The supporting strips are provided at the positions close to the first end and the second end of the filter element, which facilitates the maintenance of the distance between every two adjacent filtering surfaces near the first end and the second end of the filter element in the event that the first end and the second end are subjected to a force, in particular when sealing elements are assembled to the first end and the second end of the filter element, as well as when the filter element is mounted to an air purifier.

In some embodiments, a distance between every two adjacent supporting strips configured between the first end and the second end of the filter element is a fourth distance, and a length of the fourth distance accounts for 15% to 45% of a length between the first end and the second end of the filter element. When the plurality of supporting strips are configured between the first end and the second end of the filter element, a proper distance is reserved between every two adjacent supporting strips, which facilitates the maintenance of the distance between every two adjacent filtering surfaces near every two adjacent supporting strips.

In some embodiments, each bonding portion has a first length, the first distance is the first distance between one end of each bonding portion and a crest of the corresponding peak, and a second distance is reserved between the other end of each bonding portion and a valley bottom of the corresponding valley, wherein a sum of the first distance, the first length and the second distance is equal to a total length of each filtering surface.

In some embodiments, the first length accounts for 30% to 80% of the total width of each filtering surface, and the sum of the first distance and the second distance accounts for 20% to 70% of the total width of each filtering surface, wherein the second distance is greater than or equal to zero. In some embodiments, the bonding portions may extend to the valley bottoms or may not extend to the valley bottoms. In some embodiments, the first length accounts for 50% of the total width of each filtering surface, and the first distance and the second distance accounts for 25% of the total width of each filtering surface respectively.

In some embodiments, the foldable filter device further includes a first flexible sealing element and a second flexible sealing element, and the first flexible sealing element and the second flexible sealing element are configured to be hermetically disposed at the first end and the second end of the filter element respectively. The provision of the first flexible sealing element and the second flexible sealing element can effectively ensure the first end and the second end of the filter element to be sealed, so as to ensure that the filtered air is all filtered through the filter element and then enters into an air duct without entering into the air purifier from the first end and the second end of the filter element and affecting the filtering effect.

In some embodiments, the first flexible sealing element and/or the second flexible sealing element include wrapping edges folded towards the inner side face of the filter element and/or folded towards the outer side face of the filter element. In some embodiments, since foam is fixed to the first end and the second end of the filter element by glue, and the wrapping edges can effectively cover squeezed-out glue, the appearance at the inner side face and the outer side face of the first end and the second end of the filter element is more beautiful.

In some embodiments, the height of the wrapping edges ranges from 0 to less than or equal to 8% of the total height of the filter element. The height of the wrapping edges effectively covers squeezed-out glue.

In some embodiments, the first flexible sealing element and the second flexible sealing element are made of flexible foam materials or foam. In some embodiments, the weight of the foam is lower than that of plastics, so as to effectively reduce the weight of the whole filter element. In some embodiments, since the foam is fixed to the first end and the second end of the filter element by glue, the foam to which glue is applied may help the folded filter element return to a shape before folding. In some embodiments, the flexible foam materials may also help the folded filter element return to a shape before folding.

In some embodiments, the foldable filter device further includes a pre-filter net configured outside the filter element, the pre-filter net is configured to pre-filter and support the outer side face of the filter element, and the wrapping edges wrap around outer edges of the pre-filter net. The pre-filter net plays a role in shaping the outer side face of the filter element, and the wrapping edges prevent gaps between the end portion of the pre-filter net and positions of the first end and the second end of the filter element close to the outer side face, so that the end portion of the pre-filter net is effectively adhered to and wrapped around the positions of the first end and the second end of the filter element close to the outer side face.

In some embodiments, the foldable filter device further includes a shaping member configured for use in a non-folded state to shape the inner side face and/or the outer side face of the filter element.

According to a second aspect of the present disclosure, an air purifier is provided, and the air purifier includes any one foldable filter device in the above embodiments.

### BRIEF DESCRIPTION OF THE DRAWINGS

These and other purposes, features and advantages of embodiments of the present disclosure will become readily understood by reading the detailed description below with reference to the accompanying drawings. In the accompanying drawings, several embodiments of the present disclosure are shown by way of example and not limitation.
FIG. 1 illustrates a partial schematic diagram of arrangement of adhesives on filtering surfaces of a filter device known to inventors.
FIG. 2 illustrates a three-dimensional combined diagram of a foldable filter device according to an embodiment of the present disclosure.
FIG. 3 illustrates a three-dimensional exploded diagram of a foldable filter device shown in FIG. 2.
FIG. 4 illustrates a sectional diagram of a foldable filter device shown in FIG. 2.
FIG. 5 illustrates a three-dimensional diagram of a filter element of a foldable filter device shown in FIG. 2.
FIG. 6 illustrates a top view of a filter element shown in FIG. 5.
FIG. 7 illustrates a partial enlarged diagram of a filter element shown in FIG. 6.
FIG. 8 illustrates a partial enlarged schematic diagram of a filter element shown in FIG. 5 in an unfolded state.
FIG. 8a illustrates a partial schematic diagram of a first implementation in FIG. 8.
FIG. 8b illustrates a partial schematic diagram of a second implementation in FIG. 8.
FIG. 8c illustrates a partial schematic diagram of a third implementation in FIG. 8.
FIG. 8d illustrates a partial schematic diagram of a fourth implementation in FIG. 8.

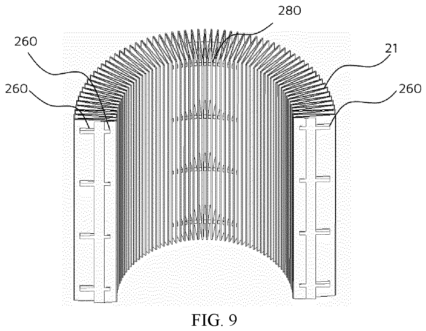

FIG. 9 illustrates a sectional diagram of a filter element shown in FIG. 6.

In each of the accompanying drawings, the same or corresponding reference numerals indicate the same or corresponding parts.

### DESCRIPTION OF THE EMBODIMENTS

Preferred embodiments of the present disclosure will be described in more detail below with reference to the accompanying drawings. Although the preferred embodiments of the present disclosure are shown in the accompanying drawings, it should be understood that the present disclosure can be implemented in various forms and should not be limited to the embodiments set forth herein. Rather, these embodiments are provided so that the present disclosure will be more thorough and complete, and will be able to fully convey the scope of the present disclosure to those skilled in the art.

As used herein, the term "comprising" and the variations thereof mean open inclusion, i.e., "including but not limited to". Unless specifically stated, the term "or" indicates "and/or". The term "based on" indicates "at least partially based on". The terms "one exemplary embodiment" and "one embodiment" indicate "at least one exemplary embodiment". The term "another embodiment" indicates "at least one additional embodiment". The terms "upper", "lower", "front", "rear" and the like indicate placement or positional relationships based on the orientation or positional relationships shown in the accompanying drawings, and are intended only to facilitate the description of the principles of the present disclosure, rather than indicate or imply that the referenced elements must have a particular orientation, be constructed or operated in a particular orientation, and therefore are not to be construed as limitations on the present disclosure.

A filter device in an air purifier known to the inventors is shaped to fit an air duct of the air purifier when being machined and molded, and typically, the filter device is machined into a shape of a hollow cylinder so that air passes through a filter section for filtration, i.e., a pleated portion from the outside of the filter device, enters the hollow portion of the cylinder, and accordingly re-discharged along the air duct. This kind of hollow cylinder filter device has a certain size and will need a certain size of a packaging box and waste packaging materials in the packaging, storage and transportation, and a lot of space is occupied during transportation, leading to high transportation costs. At the same time, since the inventors found that the upper and lower edges of the filter section of the filter device are sealed and secured into a cylinder shape by means of plastic parts, the plastic parts are made from chemical polymers, the production of the polymers consumes energy, and the plastic parts are generally heavy in weight, thereby increasing the weight of the entire filter device. Furthermore, the chemical polymers do not degrade, and once the filter device is scraped, it is bound to pollute the environment and not facilitate environmental protection and social sustainability.

Some filter devices known to the inventors are manufactured as foldable filter devices to reduce the packaging size as well as reduce the transportation costs.

Soft borders are provided on upper and lower edges of one of the foldable filter devices to seal the upper and lower edges of the filter device, so that air to be filtered can pass through a filter section of the foldable filter device to ensure the filtering effect. Furthermore, due to the soft borders, the hollow foldable filter device can be flattened in the radial direction of the cylinder during packaging and transportation so as to reduce the overall size of the foldable filter device, reduce packaging materials and transportation space, and accordingly reduce the cost. The inventors found that the problem of this foldable filter device is that due to the uncertainty of the gap between filtering surfaces, on the one hand, the aesthetics of the filter element is affected; on the other hand, due to the uncertainty of the gap between the filtering surfaces, same batches of products can not be massively reproduced and manufactured, which affects the consistency of the products; furthermore, due to the uncertainty of the gap between the filtering surfaces, the contact area of external air when passing through the filtering surfaces is variable, and thus the air resistance is also variable, resulting in unstable filtering effect.

Pull lines or adhesives are provided between peaks of adjacent filter sections of another foldable filter device known to the inventors so as to ensure a certain distance between adjacent filtering surfaces, but the inventors found that no sealing and shaping border is provided on the upper and lower edges of the filter device, which results in the fact that a portion of the air enters into an air purifier without being filtered at the upper and lower edges of the filter device during filtration and thus the filtering effect is reduced. Furthermore, the pull lines are disposed between the adjacent peaks of the foldable filter device, which can only ensure sufficient width between adjacent filtering surfaces when the pull lines are fully tensioned, but when the pull lines are not tensioned, the distance between adjacent filtering surfaces decreases, thereby failing to ensure a certain distance between adjacent filtering surfaces.

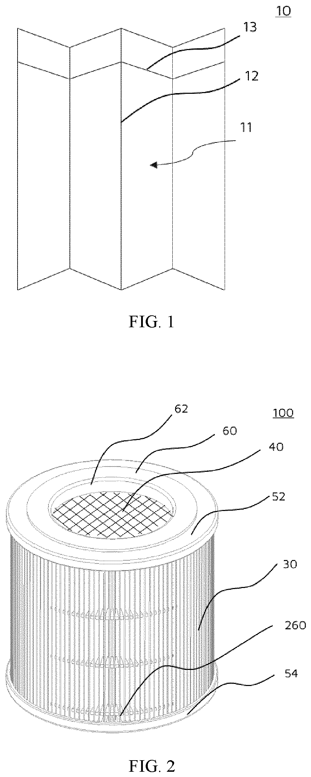

In addition, referring to FIG. 1, a schematic diagram of arrangement of a bonding portion 13 on a plurality of filtering surfaces 11 of a filter element 10 of a filter device in an unfolded state when the filter element is not machined into a cylinder shape is shown. As shown in FIG. 1, the bonding portion 13 is uninterruptedly arranged on the plurality of connected filtering surfaces 11 in a radial direction of the cylinder-shaped filter device, and non-flexible adhesives are also arranged at peaks 12, when the filter element is folded and flattened, a gap between two adjacent filtering surfaces located on the outer side faces of two ends of the flattened filter element becomes larger, and a gap between two adjacent filtering surfaces located on the inner side faces of two sides of the flattened filter element on which a force is applied also becomes larger. Therefore, the adhesives of the adjacent filtering surfaces is pulled off due to the increased distance between the adjacent filtering surfaces, and accordingly the certain gap between the adjacent filtering surfaces can not be ensured, resulting in affecting the filtering area and the resistance and thus affecting the filtering effect.

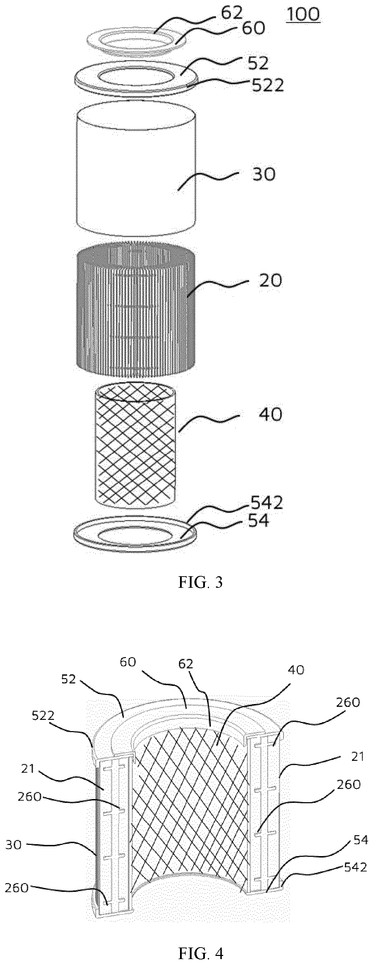

Referring to FIG. 2 to FIG. 4, FIG. 2 and FIG. 3 illustrate a three-dimensional combined diagram and a three-dimensional exploded diagram of a foldable filter device 100 according to an embodiment of the present disclosure respectively.

The foldable filter device 100 includes a filter element 20, a pre-filter net 30 disposed outside the filter element 20, a carbon layer 40 disposed inside the filter element, a first sealing element 52 disposed at one end of the filter element 20 and a second sealing element 54 disposed at the other end of the filter element 20. In addition, the foldable filter device 100 may further include a shaping member 60 disposed at a first end of the filter element 20 for use in a non-folded state.

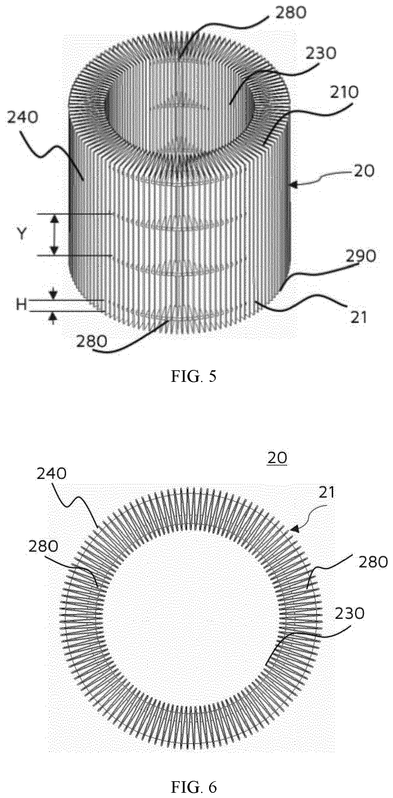

Referring to FIG. 5 to FIG. 8, the filter element 20 is constructed into a wave shape and includes a plurality of filtering surfaces 21 connected to each other in a folded manner, peaks 250 located at an outer corner of an intersection of every two adjacent filtering surfaces 21, and valleys 270 located at an inner corner of the intersection of every two adjacent filtering surfaces 21, and flexible bonding portions 260 are provided in all the valleys 270 to bond every two adjacent filtering surfaces 21. "It should be understood that in addition to the construction shown in the above embodiment, the bonding portions may be provided with a different setup in other embodiments, and the flexible bonding portions 260 may be provided in part of the valleys 270. these implementations are all included in the technical solutions of the present disclosure." In an embodiment according to the present disclosure, the filter element 20 is made of a material that can filter large particles, small particles, and harmful gases from air. In an embodiment according to the present disclosure, the filter element 20 is processed from a combination of a layer of PP meltblown material and a layer of PET material and configured to filter particulate matters in air. In some embodiments according to the present disclosure, a carbon layer or other chemical substance may also be provided between the layer of PP meltblown material and the layer of PET material of the filter element 20 and configured to absorb harmful gases in air.

Referring to FIG. 5 to FIG. 7, in an embodiment according to the present disclosure, the flexible bonding portions 260 in the valleys 270 of the filter element 20 are formed by bonding the bonding portions 260 arranged on every two adjacent filtering surfaces 21, and the bonding portions 260 are made of foamable hot melt adhesive materials so as to have certain resilience. A first distance S is reserved between each bonding portion 260 and the corresponding peak 250, and the plurality of bonding portions 260 form supporting strips 280 on the wave-shaped filter element 20 to maintain a gap between every two adjacent filtering surfaces 21. When the foldable filter device 100 is folded, even though the angle of inner corners of some of the valleys 270 at the place where the filter element 20 is folded becomes larger, i.e., the distance between every two adjacent filtering surfaces 21 on both sides of the valleys 270 close to the positions of the peaks 250 is stretched to a large extent, since the first distance S is reserved between each bonding portion 260 and the corresponding peak 250, i.e., the filtering surfaces 21 on both sides of crests of the peaks 250 are not provided with the bonding portions 260 within the length range of the first distance S, even though the bonding portions 260 located in the valleys 270 and at the first distance S from the peaks 250 are stretched to a small extent, the supporting strips 280 can withstand the small extent of stretching without breaking due to the resilience of the bonding portions 260, so that even if the angle of inner corners of some of the valleys 270 becomes larger after the filter element 20 is folded, the gap between every two adjacent filtering surfaces 21 can be maintained. Correspondingly, when the foldable filter device 100 is folded, the angle of inner corners of some of the valleys 270 at the place where the filter element 20 is folded becomes smaller, the bonding portions 260 in the valleys 270 are extruded to a certain extent, and the supporting strips 280 can withstand this extent of extrusion without breaking due to the resilience of the bonding portions 260, so that even if the angle of inner corners of some of the valleys 270 becomes smaller when the filter element 20 is folded, the gap between every two adjacent filtering surfaces 21 can be maintained. When the foldable filter device 100 is recovered from the folded state, the supporting strips 280 can be quickly recovered from the stretched or squeezed state due to the resilience of the bonding portions 260, so that the gap between every two adjacent filtering surfaces 21 is maintained, which in turn ensures the filtering effect.

In some embodiments according to the present disclosure, the filter element 20 includes an inner side face 230 and an outer side face 240, the crests of the peaks 250 may face the inner side face 230 of the filter element 20 or the outer side face 240 of the filter element 20, and the valley bottoms of the valleys 270 may face the inner side face 230 of the filter element 20 or the outer side face 240 of the filter element 20. The plurality of supporting strips 280 are configured to face the inner side face 230 and the outer side face 240 of the filter element 20. After the supporting strips 280 are configured to face the inner side face 230 and the outer side face 240 of the filter element 20 respectively, a certain gap can be maintained between every two adjacent filtering surfaces 21 near the supporting strips 280 configured on the inner side and the outer side in the thickness direction of the filter element 20 before and after the filter element 20 is folded. The filter element 20 includes a first end 210 and a second end 290, and the plurality of supporting strips 280 are configured between the first end 210 and second end 290 of the filter element 20. After the supporting strips 280 are configured between the first end 210 and the second end 290 of the filter element 20, a certain gap can be maintained between every two adjacent filtering surfaces 21 near supporting strips 280 configured between the first end 210 and the second end 290 of the filter element before and after the filter element 20 is folded.

In some embodiments, a third distance H is reserved between the first end and the supporting strip 280 closest to the first end 210 and a third distance H is reserved between the second end 290 and the supporting strip 280 closest to the second end 290, and a length of the third distance H accounts for 5% to 15% of a length between the first end 210 and the second end 290 of the filter element, optionally, 10%. The supporting strips 280 are provided at the positions close to the first end 210 and the second end 290 of the filter element 20, which facilitates the maintenance of the distance between every two adjacent filtering surfaces 21 near the first end 210 and the second end 290 of the filter element 20 in the event that the first end 210 and the second end 290 are subjected to a force, in particular when a first sealing element 52 and a second sealing element 54 are assembled to the first end 210 and the second end 290 of the filter element 20, as well as when the filter element 20 is mounted to an air purifier.

In some embodiments, a distance between every two adjacent supporting strips 280 configured between the first end 210 and the second end 290 of the filter element 20 is a fourth distance Y, and a length of the fourth distance Y accounts for 15% to 45% of a length between the first end 210 and the second end 290 of the filter element 20, optionally, 30%. When the plurality of supporting strips 280 are configured between the first end 210 and the second end 290 of the filter element 20, a proper distance is reserved between every two adjacent supporting strips 280, which facilitates the maintenance of the distance between every two adjacent filtering surfaces 21 near every two adjacent supporting strips 280.

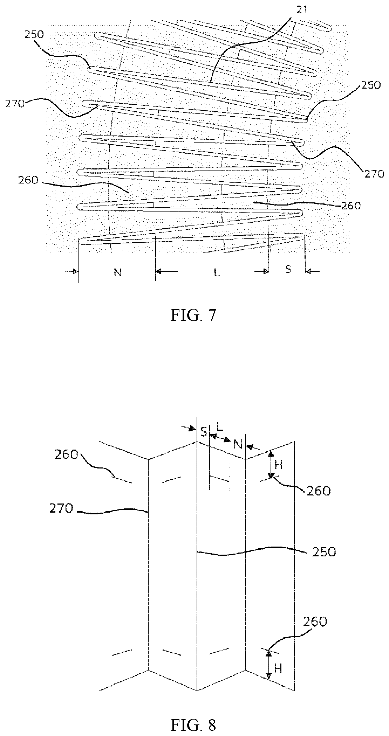

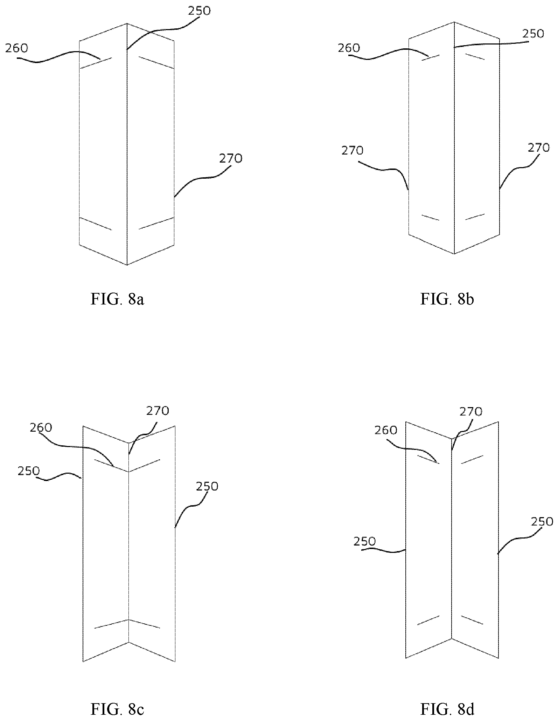

Referring to FIG. 8a to FIG. 8d, in some embodiments according to the present disclosure, the filter element 20 is in a sheet structure formed by connecting the plurality of filtering surfaces 21 in a folded manner before being manufactured into a cylinder, and the noncontinuous bonding portions 260 are provided on each filtering surface 21. In some embodiments of the present disclosure, the bonding portions may also be configured in other shapes capable of bonding the two filtering surfaces, such as an X shape, an S shape, a triangle, a diamond, a circle, an oval, a trapezoid, or a rectangle.

In some embodiments according to the present disclosure, as shown in FIG. 8a to FIG. 8b, the bonding portions 260 provided on the filtering surfaces 21 on both sides of the peaks 250 are not connected at the peaks 250, which means that one ends of the bonding portions 260 do not extend to the crests of the peaks 250 and the other ends extend to the valley bottoms of the valleys 270, as shown in FIG. 8a; or one ends of the bonding portions 260 do not extend to the crests of the peaks 250 and the other ends also do not extend to the valley bottoms of the valleys 270, as shown in FIG. 8b. As shown in FIG. 8c to FIG. 8d, one ends of the bonding portions 260 provided on the filtering surfaces 21 on both sides of the valley bottoms of the valleys 270 do not extend to the crests of the peaks 250, which means that one ends of the bonding portions 260 do not extend to the crests of the peaks 250 and the other ends extend to the valley bottoms of the valleys 270, as shown in FIG. 8c; or one ends of the bonding portions 260 do not extend to the crests of the peaks 250 and the other ends also do not extend to the valley bottoms of the valleys 270, as shown in FIG. 8d.

As shown in FIG. 8, in some embodiments according to the present disclosure, optionally, each bonding portion 260 has a first length L, one end of each bonding portion 260 is at a first distance S from the crest of the corresponding peak 250, and the other end of each bonding portion 260 is at a second distance N from the valley bottom of the corresponding valley where the other end of the bonding portion 260 is located. The sum of the first distance S, the first length L and the second distance N is the total width of each filtering surface 21. The first distance S may be equal to the second distance N, and the first distance S may not be equal to the second distance N. In some embodiments according to the present disclosure, the first length L accounts for 30% to 80% of the total width of each filtering surface 21, optionally, 50%; and the sum of the first distance S and the second distance N accounts for 20% to 70% of the total width of each filtering surface 21, wherein the second distance is greater than or equal to zero. Optionally, the sum of the first distance S and the second distance N accounts for 50% of the total width of each filtering surface 21, wherein optionally, the first distance S and the second distance N accounts for 25% of the total width of each filtering surface 21 respectively.

Referring to FIG. 2 to FIG. 4, the pre-filter net 30 is installed around the exterior of the filter element 20 in a wrapping manner during assembly, and the provision of the pre-filter net 30 plays an important role in prolonging the service life of the filter device 100. The pre-filter net 30 can be used for initial filtration of foreign matters such as animal hair, large particles of dust, etc. in air, and the pre-filter net 30 can be periodically swept or replaced so as to perform for a long period of time. In addition, the pre-filter net 30 may also assist in shaping the filter element 20, i.e., fixing the shape of the exterior of the filter element without being easily deformed.

In some embodiments, the foldable filter device 100 is provided with the carbon layer 40 for use in a non-folded state, and the carbon layer 40 is assembled to the interior of the filter element 20 and configured to absorb harmful gases, such as formaldehyde in air. In some embodiments, a supporting net may be further provided outside the carbon layer 40, and configured to fix the carbon layer 40 and also to support the cylinder-shaped inner ring of the filter element 20.

In some embodiments, the foldable filter device 100 includes a first flexible sealing element 52 and a second flexible sealing element 54. The first flexible sealing element 52 and the second flexible sealing element 54 are made of flexible materials with resilience. The first flexible sealing element 52 and the second flexible sealing element 54 are configured to be hermetically provided at the first end 210 and the second end 290 of the filter element 20 respectively. The provision of the first flexible sealing element 52 and the second flexible sealing element 54 can effectively ensure the first end 210 and the second end 290 of the filter element to be sealed, so as to ensure that the filtered air is all filtered through the filter element 20 and then enters into an air duct without entering into the air purifier from the first end 210 and the second end 290 of the filter element 20 and affecting the filtering effect.

Optionally, the flexible materials may be foam materials or foam. The selection of foam can greatly reduce the overall weight of the foldable filter device 100 due to the lightness of the foam, which usually makes the weight of the foldable filter device 100 to be reduced to 50% to 80% of the weight of previously used plastic materials, thus reducing the energy needed for transportation, and thus reducing carbon dioxide emissions as well as facilitating degradation, and contributing to environmental protection. The first flexible sealing element 52 and the second flexible sealing element 54 made of foam need to be bonded and fixed to the first end 210 and the second end 290 of the filter element 20 by means of glue. In some embodiments, the first flexible sealing element 52 and/or the second flexible sealing element 54 include wrapping edges 522, 542 folded towards the inner side face 230 of the filter element 20 and/or folded towards the outer side face of the filter element. In some embodiments, glue is applied to one surface of the second flexible sealing element 54 made of ring foam, and then the filter element 20 is pressed against the second flexible sealing element 54 with the inner side face of the filter element aligned with the inner ring of the second flexible sealing element, at which time the outer ring edge of the second flexible sealing element 54 is folded upward due to the force of the crimp, and then further clamped and pressed by a clamp to form the wrapping edge 542 of the second flexible sealing element that is tightly bonded to the outer side face of the bottom edge of the pre-filter net 30. The wrapping edge 542 tightly wraps the bottom edge of the pre-filter net 30, so that the bottom edge of the pre-filter net 30 fits tightly with the filter element 20 without generating gaps, further ensuring that all air to be filtered passes through the pre-filter net 30 to achieve the pre-filtering effect. Optionally, a turnup that is folded towards the interior of the filter element 20 may also be provided. After the second flexible sealing element 54 is installed, the filter element 20 is then turned up and down and pressed onto the first flexible sealing element 52 to which glue is applied, and then the wrapping edge 522 of the first flexible sealing element 52 is further processed, and the wrapping edge 522 of the first flexible sealing element 52 also tightly wraps the outer ring of the top of the pre-filtering net 30, so that the pre-filtering net 30 and the filter element 20 closely fit without generating gaps, which further ensures that all air to be filtered passes through the pre-filter net to achieve the filtering effect. Since the glue is applied to the first flexible sealing element 52 and the second flexible sealing element 54, the first end and the second end of the filter element 20 are sealed by the solidified glue to prevent air leakage. Since the foam is fixed to the first end 210 and the second end 290 of the filter element 20 by glue, and the wrapping edges 522, 542 can effectively cover squeezed-out glue, the appearance at the inner side face 230 and the outer side face 240 of the first end 210 and the second end 290 of the filter element 20 is more beautiful. In some embodiments, the height of the wrapping edges ranges from 0 to less than or equal to 8% of the total height of the filter element 20. Optionally, the height of the wrapping edges is 5% of the height of the filter element 20. The height of the wrapping edges effectively covers squeezed-out glue. In some embodiments, since the foam is fixed to the first end 210 and the second end 290 of the filter element 20 by glue, the foam to which glue is applied may help the folded filter element 20 return to a shape before folding. In some embodiments, the first flexible sealing element and the second flexible sealing element made of flexible foam materials may also help the folded filter element 20 return to a shape before folding.

In some embodiments, the foldable filter device 100 is provided with the shaping member 60 for use in a non-folded state to shape the filter element 20, and the shaping member 60 may be provided to be able to clamp and position the inner side face 230 and/or the outer side face 240 of the filter element 20, so that the inner side face 230 and/or the outer side face 240 remain molded and not deformed. When the shaping member 60 is in a ring shape, the cross section thereof may be provided in a U shape or an L shape, and when the cross section is provided in the L shape, the shaping member 60 is provided with an inner edge 62 protruding into the inner side face 230 of the filter element 20 to ensure that the inner side face 230 of the filter element 20 retains the shape. When the cross section of the shaping member 60 is provided in the U shape, the shaping member 60 has an inner edge protruding towards the inner side face 230 of the filter element 20 and an outer edge protruding towards the outer side face 240 of the filter element 20 to ensure the shape of the inner and outer side faces of the filter element 20.

In some embodiments, a foldable filter device 100 without a shaping member is put into a plastic packaging bag, then the foldable filter device 100 is pressed to be folded and flattened, then the plastic packaging bag is vacuumized, and the size of the entire plastic packaging bag is only 50%-60% of the size before folding and flattening. Meanwhile, the size of an external packaging box is reduced accordingly, thus saving a lot of materials for plastic bags and boxes. When transporting the same number of filter devices, the folded filter devices require only 50-60% of the space occupied when not folded, greatly reducing transportation costs.

Although the present subject matter has been described using language specific to structural features and/or method logical actions, it is to be understood that the subject matter as defined in the appended claims is not necessarily limited to the particular features or actions described above. Rather, the particular features and actions described above are merely exemplary forms to implement the claims.

The embodiments of the present disclosure have been described above. The above description is exemplary, rather than exhaustive, and is not limited to the disclosed embodiments. Numerous modifications and alterations are apparent to those of ordinary skill in the art without departing from the scope and spirit of the illustrated embodiments. The selection of terms used herein is intended to best explain the principles and practical applications of the various embodiments or the improvements to technologies on the market, or to enable other persons of ordinary skill in the art to understand the embodiments disclosed herein.

## Claims

1. A foldable filter device (100), **characterized in that** the foldable filter device comprises a filter element (20), the filter element (20) is constructed into a wave shape and comprises a plurality of filtering surfaces (21) connected to each other in a folded manner, peaks (250) located at an outer corner of an intersection of every two adjacent filtering surfaces (21), and valleys (270) located at an inner corner of the intersection of every two adjacent filtering surfaces (21), flexible bonding portions (260) are provided in all or part of the valleys (270) to bond every two adjacent filtering surfaces (21), a first distance (S) is reserved between each bonding portion (260) and the corresponding peak (250), and the plurality of bonding portions (260) form supporting strips (280) on the wave-shaped filter element (20) to maintain a gap between every two adjacent filtering surfaces (21).

2. The foldable filter device (100) according to claim 1, **characterized in that** the flexible bonding portions (260) are made of foamable hot melt adhesive materials.

3. The foldable filter device (100) according to claim 1, **characterized in that** the filter element (20) comprises an inner side face (230) and an outer side face (240), and the bonding portions (260) are configured within the valleys (270) facing the inner side face (230) of the filter element (20), and/or within the valleys (270) facing the outer side face (240) of the filter element (20).

4. The foldable filter device (100) according to claim 1, **characterized in that** the filter element (20) comprises a first end (210) and a second end (290), and at least one or more of the supporting strips (280) are configured between the first end (210) and the second end (290) of the filter element (20).

5. The foldable filter device (100) according to claim 4, **characterized in that** a third distance (H) is reserved between the first end (210) and the supporting strip (280) closest to the first end (210) and/or a third distance (H) is reserved between the second end (290) and the supporting strip (280) closest to the second end (290), and a length of the third distance (H) accounts for 5% to 15% of a length between the first end and the second end of the filter element (20).

6. The foldable filter device (100) according to claim 4, **characterized in that** a distance between every two adjacent supporting strips (280) configured between the first end (210) and the second end (290) of the filter element (20) is a fourth distance (Y), and a length of the fourth distance (Y) accounts for 15% to 45% of a length between the first end (210) and the second end (290) of the filter element (20).

7. The foldable filter device (100) according to claim 1, **characterized in that** each bonding portion (260) has a first length (L), the first distance (S) is the first distance (S) between one end of each bonding portion (260) and a crest of the corresponding peak (250), and a second distance (N) is reserved between the other end of each bonding portion (260) and a valley bottom of the corresponding valley (270), wherein a sum of the first distance (S), the first length (L) and the second distance (N) is equal to a total length of each filtering surface (21).

8. The foldable filter device (100) according to claim 7, **characterized in that** the first length (L) accounts for 30% to 80% of a total width of each filtering surface (21), and a sum of the first distance (S) and the second distance (N) accounts for 20% to 70% of the total width of each filtering surface (21), wherein the second distance (N) is greater than or equal to zero.

9. The foldable filter device (100) according to claim 1, **characterized in that** the foldable filter device (100) further comprises a first flexible sealing element (52) and a second flexible sealing element (54), and the first flexible sealing element (52) and the second flexible sealing element (54) are configured to be hermetically disposed at a first end (210) and a second end (290) of the filter element (20) respectively.

10. The foldable filter device (100) according to claim 9, **characterized in that** the first flexible sealing element (52) and/or the second flexible sealing element (54) comprise wrapping edges (522, 542) folded towards an inner side face (230) of the filter element (20) and/or folded towards an outer side face (240) of the filter element (20).

11. The foldable filter device (100) according to claim 10, **characterized in that** a height of the wrapping edges ranges from 0 to less than or equal to 8% of a total height of the filter element (20).

12. The foldable filter device (100) according to claim 9, **characterized in that** the first flexible sealing element (52) and the second flexible sealing element (54) are made of foam materials or foam.

13. The foldable filter device (100) according to claim 10, **characterized in that** the foldable filter device (100) further comprises a pre-filter net (30) configured outside the filter element (20), the pre-filter net (30) is configured to pre-filter and support the outer side face (240) of the filter element (20), and the wrapping edges wrap around outer edges of the pre-filter net (30).

14. The foldable filter device (100) according to claim 1, **characterized in that** the foldable filter device (100) further comprises a shaping member (60) configured for use in a non-folded state to shape an inner side face (230) and/or an outer side face (240) of the filter element (20).

15. An air purifier, **characterized by** comprising the foldable filter device (100) according to any one of claims 1 to 14.
